# EUROPÄISCHE PATENTANMELDUNG

(11) **EP 4 570 545 A1**
(43) Veröffentlichungstag der Anmeldung: **18.06.2025**
(21) Anmeldenummer: 23217177.7
(22) Anmeldetag: 15.12.2023
(51) Int. Cl.: B60J 5/14, B60J 5/08

(54) **NUTZFAHRZEUGAUFBAU MIT ROLLTOR**

(71) Anmelder: Schmitz Cargobull AG, 48341 Altenberge (DE)
(72) Erfinder: OVERBECK, Nicolas, 46399 Bocholt (DE)
(74) Vertreter: Cohausz & Florack

(57) **Zusammenfassung**

Beschrieben und dargestellt ist ein Nutzfahrzeugaufbau (2), insbesondere für einen Lastkraftwagen, Anhänger oder Sattelauflieger (1), mit einem Rolltor (8), wobei das Rolltor (8) ein von einer den Nutzfahrzeugaufbau (2) versschließenden Schließstellung in eine den Nutzfahrzeugaufbau (2) zum Be- und/oder Entladen freigebende Offenstellung und zurück verstellbares Wandelement (9) und ein Schienensystem (13) zum Führen des Wandelements (9) beim Verstellen von der Schließstellung in die Offenstellung und zurück aufweist, wobei das Wandelement (9) eine Reihe von den Nutzfahrzeugaufbau (2) in der Schließstellung des Wandelements (9) jeweils abschnittsweise verschließenden Paneelen (10,11,12) aufweist, wobei eine Mehrzahl von jeweils an einer zugeordneten Montageeinrichtung (22,23) eines der Paneele (11,12) form- und/oder kraftschlüssig montierten Führungseinrichtungen (18,19) jeweils zum Führen des jeweiligen Paneels (11,12) entlang des Schienensystems (13) vorgesehen ist und wobei wenigstens zwei der Führungseinrichtungen (18,19) wenigstens in der Schließstellung des Wandelements (9) wenigstens abschnittsweise, insbesondere wenigstens im Wesentlichen, auf unterschiedlichen Höhenniveaus bezogen auf das der jeweiligen Führungseinrichtung (18,19) zugeordnete Paneel (11,12) angeordnet sind. Damit der Nutzfahrzeugaufbau einfacher und kostengünstiger gefertigt werden kann, ist vorgesehen, dass die Führungseinrichtungen (18,19) und die Montageeinrichtungen (22,23) derart korrespondierend zueinander ausgebildet sind, dass die Führungseinrichtungen (18,19) jeweils an der wenigstens einen der wenigstens einen anderen Führungseinrichtung (18,19) zugeordneten Montageeinrichtung (22,23) form- und/oder kraftschlüssig montierbar sind.

## Beschreibung

Die Erfindung betrifft einen Nutzfahrzeugaufbau, insbesondere für einen Lastkraftwagen, Anhänger oder Sattelauflieger, mit einem Rolltor, wobei das Rolltor ein von einer den Nutzfahrzeugaufbau versschließenden Schließstellung in eine den Nutzfahrzeugaufbau zum Be- und/oder Entladen freigebende Offenstellung und zurück verstellbares Wandelement und ein Schienensystem zum Führen des Wandelements beim Verstellen von der Schließstellung in die Offenstellung und zurück aufweist, wobei das Wandelement eine Reihe von den Nutzfahrzeugaufbau in der Schließstellung des Wandelements jeweils abschnittsweise verschließenden Paneelen aufweist, wobei eine Mehrzahl von jeweils an einer zugeordneten Montageeinrichtung eines der Paneele form- und/oder kraftschlüssig montierten Führungseinrichtungen jeweils zum Führen des jeweiligen Paneels entlang des Schienensystems vorgesehen ist und wobei wenigstens zwei der Führungseinrichtungen wenigstens in der Schließstellung des Wandelements wenigstens abschnittsweise, insbesondere wenigstens im Wesentlichen, auf unterschiedlichen Höhenniveaus bezogen auf das der jeweiligen Führungseinrichtung zugeordnete Paneel angeordnet sind.

Nutzfahrzeuge, beispielsweise in Form von Lastkraftwagen, Anhängern und Sattelaufliegern, sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Nutzfahrzeugsaufbauten auf, welche der Aufnahme der zu transportierenden Güter in einem Laderaum dienen.

So sind beispielsweise Planenaufbauten bekannt, bei denen die Seitenwände und das Dach durch wenigstens eine Planeneinheit verschlossen sind. Die Stirnwand ist bei Planenaufbauten meist als feste Wand ausgebildet, während die Rückwand meist Flügeltüren aufweist, um den Laderaum bedarfsweise von hinten zu beladen. Wenn eine Planeneinheit entlang der Seitenwand verschoben werden kann, spricht man auch von sogenannten Curtainsidern.

Neben den Planenaufbauten sind beispielsweise auch Kofferaufbauten mit festen Seitenwänden, einer festen Stirnwand und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport, geeignet. Die Rückwand der Kofferaufbauten wird meist durch zwei Flügeltüren oder ein Rolltor verschlossen.

Die Kofferaufbauten weisen oftmals an der Stirnwand, dem Dach und/oder den Seitenwänden zweischalige Paneele auf. Die Paneele umfassen dabei eine äußere und eine innere, strukturgebende Decklage sowie eine dazwischen vorgesehene Kernlage, die typischerweise aus einem, insbesondere geschäumten, Kunststoff gebildet wird. Dabei können die innere und/oder die äußere Decklage selbst bedarfsweise mehrlagig aufgebaut sein. Insbesondere geschäumte Kernlagen oder Kernlagen mit einem hohen Luftanteil können für ein hohes Maß an thermischer Isolation des Laderaums sorgen. Entsprechende Nutzfahrzeugaufbauten werden daher zweckmäßig für Kühltransporte eingesetzt. Um den Laderaum zu kühlen, weisen diese Nutzfahrzeuge typischerweise Transportkältemaschinen auf, die Luft aus dem Laderaum ansaugen, die angesaugte Luft kühlen und die gekühlte Luft anschließend wieder in den Laderaum zurück blasen. Entsprechende Transportkältemaschinen sind meist an der Stirnwand des Nutzfahrzeugaufbaus montiert.

Darüber hinaus sind Kofferaufbauten mit einschaligen Paneelen bekannt, die einen umlaufenden Rahmen oder eine von dem Paneel verschlossene Gitterstruktur aus vertikalen und horizontalen Profilen aufweisen. Das Paneel wird dabei meist aus einem oder aus mehreren Paneelelementen gebildet, die wenigstens im Wesentlichen aus einem glasfaserverstärkten Kunststoff, Stahl oder Aluminium gebildet sind, sowie bedarfsweise lackiert sind. Um beispielsweise das Dach abzustützen, können die Paneele mit einer Mehrzahl von zur Aussteifung des Paneels vorgesehenen, wenigstens im Wesentlichen quer zur Längsrichtung des Paneels ausgerichteten und in Längsrichtung des Paneels zwischen den Rändern des Paneels angeordneten Pfeilerelementen vorgesehen sein. Aufgrund der einschaligen Bauweise dieser Nutzfahrzeugaufbauten werden diese für den sogenannten Trockentransport aber nur in Ausnahmefällen für den Kühltransport eingesetzt. Nutzfahrzeuge mit entsprechenden Kofferaufbauten, werden auch als Trockenfrachter bezeichnet.

Nutzfahrzeugaufbauten, insbesondere Kofferaufbauten, deren Rückwand keine Flügeltüren aufweisen, sind meist mit einem Rolltor zum Verschließen der Rückwand ausgestattet. Die Rolltore weisen typischerweise ein Wandelement auf, das aus einer Reihe von Paneelen zusammengesetzt ist und entlang eines Schienensystems des Rolltors von einer unteren, die Rückwand verschließenden Schließstellung in eine obere, die Rückwand zum Be- und/oder Entladen des Nutzfahrzeugaufbaus freigebende Offenstellung und zurück verstellt werden kann. Um die Paneele dabei entlang des Schienensystems zu führen, sind an den Paneelen in der Regel eine Mehrzahl von Führungseinrichtungen vorgesehen, die in der Regel jeweils form- und/oder kraftschlüssig an einer der jeweiligen Führungseinrichtung zugeordneten Montageeinrichtung eines der Paneele montiert sind. Dabei sind die Führungseinrichtungen häufig nicht alle auf demselben Höhenniveau bezogen auf das der jeweiligen Führungseinrichtung zugeordneten Paneel angeordnet. Vielmehr sind häufig wenigsten zwei der Führungseinrichtungen zumindest in der Schließstellung des Wandelements auf unterschiedlichen Höhenniveaus bezogen auf das der jeweiligen Führungseinrichtung zugeordnete Paneel angeordnet, um die Paneele an unterschiedlichen Stellen der Paneele entlang des Schienensystems an dem Schienensystem zu führen. Dies kann hinsichtlich einer präzisen und ruckelfreien Führung der Paneele an dem Schienensystem vorteilhaft sein.

Rolltore machen das Aufschwenken von Flügeltüren an der Rückwand des Nutzfahrzeugaufbaus entbehrlich, was aus Platzgründen nicht immer problemlos erfolgen kann. Nachteilig an Rolltoren ist aber, dass diese grundsätzlich recht aufwendig und damit teuer sind.

Daher liegt der vorliegenden Erfindung die Aufgabe zugrunde, Nutzfahrzeugaufbauten der eingangs genannten und zuvor näher erläuterten Art derart auszugestalten und weiterzubilden, dass diese einfacher und kostengünstiger gefertigt werden können.

Diese Aufgabe ist bei einem Nutzfahrzeugaufbau nach dem Oberbegriff von Anspruch 1 dadurch gelöst, dass die Führungseinrichtungen und die Montageeinrichtungen derart korrespondierend zueinander ausgebildet sind, dass die Führungseinrichtungen jeweils an der wenigstens einen der wenigstens einen anderen Führungseinrichtung zugeordneten Montageeinrichtung form- und/oder kraftschlüssig montierbar sind.

Indem die Führungseinrichtungen und die Montageeinrichtungen derart korrespondierend zueinander ausgebildet sind, dass die Führungseinrichtungen jeweils nicht nur an der zugeordneten Montageeinrichtung form- und/oder kraftschlüssig montiert werden können, sondern insbesondere auch an der wenigstens einen Montageeinrichtung, an der die wenigstens eine auf einem anderen Höhenniveau angeordnete Führungseinrichtung montiert ist, wird ein flexiblerer Einsatz der Führungseinrichtungen ermöglicht. So kann der Herstellungsprozess des Rolltors vereinfach werden. Insbesondere kann auf diese Weise der Montageprozess der Führungseinrichtungen an dem wenigstens einen Paneel vereinfacht werden. Vorzugsweise muss dann bei der Montage der Führungseinrichtungen an den Montageeinrichtungen des wenigstens einen Paneels nämlich nicht darauf geachtet werden, welche Führungseinrichtung an welcher Montageeinrichtung montiert wird. Vielmehr kann grundsätzlich jede der Führungseinrichtungen an jeder der Montageeinrichtungen montiert werden.

Der Nutzfahrzeugaufbau kann für ein Nutzfahrzeug vorgesehen sein. Dann kann das Nutzfahrzeug vorzugsweise als Lastkraftwagen, Anhänger oder Sattelauflieger ausgebildet sein. Zweckmäßigerweise kann der Nutzfahrzeugaufbau auch Teil eines Nutzfahrzeugs, insbesondere eines Lastkraftwagens, Anhängers oder Sattelaufliegers, sein.

Das Schienensystem kann ein oder mehrere Schienenelemente aufweisen, an dem oder denen das Wandelement über die Führungseinrichtungen geführt ist. Dabei kann das wenigstens eine Schienenelement im Bereich der Rückwand und im Bereich des Dachs des Kofferaufbaus gerade Schienenabschnitte aufweisen, wobei die geraden Schienenabschnitte im Verbindungsbereich zwischen der Rückwand und dem Dach jeweils über einen bogenförmigen Schienenabschnitt miteinander verbunden sein können.

Die Paneele des Rolltors können als Profile vorzugsweise aus Kunststoff, Stahl oder Aluminium ausgebildet sein. Dabei können die Profile einen oder mehrere Hohlräume einschließen, um leicht und dennoch stabil ausgebildet werden zu können. Unabhängig von ihrer Ausgestaltung können die Paneele in der Schließstellung des Wandelements zweckmäßigerweise der Reihe nach übereinander angeordnet sein, wobei sich die Paneele quer zur Rückwand des Nutzfahrzeugaufbaus erstrecken können. Die Paneele sind vorzugsweise gegeneinander verschwenkbar miteinander verbunden. Zur Ausbildung der Verbindungen können zumindest die mittleren der Paneele jeweils einen oberen Verbindungsabschnitt, insbesondere ein oberes Verbindungsprofil, und einen unteren Verbindungsabschnitt, insbesondere ein unteres Verbindungsprofil, aufweisen, die derart korrespondierend zueinander ausgebildet sein können, dass sie einerseits formschlüssig miteinander verbunden und andererseits um zu den Paneelen parallele Schwenkachsen gegeneinander geschwenkt werden können. Das oberste Paneel des Wandelements kann an seinem oberen Rand einen Verbindungsabschnitt, insbesondere ein Verbindungsprofil, zum Verbinden mit einem Dichtelement zum Abdichten des Wandelements in der Schließstellung gegenüber einem oberen Teil eines Rückwandrahmens und/oder einem Dach des Nutzfahrzeugaufbaus aufweisen. Das unterste Paneel des Wandelements kann an seinem unteren Rand einen Verbindungsabschnitt, insbesondere ein Verbindungsprofil, zum Verbinden mit einem Dichtelement zum Abdichten des Wandelements in der Schließstellung gegenüber einem unteren Teil eines Rückwandrahmens und/oder einem Boden des Nutzfahrzeugaufbaus aufweisen.

Die wenigstens zwei auf unterschiedlichen Höhenniveaus angeordneten Führungseinrichtungen können beispielsweise an unterschiedlichen Paneelen montiert sein. Zwingend erforderlich ist dies jedoch nicht. Vielmehr ist es auch denkbar, dass die wenigstens zwei auf unterschiedlichen Höhenniveaus angeordneten Führungseinrichtungen an demselben Paneel montiert sind. Unabhängig davon können die wenigstens zwei auf unterschiedlichen Höhenniveaus angeordneten Führungseinrichtungen bevorzugt nicht nur abschnittsweise, sondern zumindest in der Schließstellung des Wandelements wenigstens im Wesentlichen auf unterschiedlichen Höhenniveaus bezogen auf das der jeweiligen Führungseinrichtung zugeordnete Paneel angeordnet sein. Dies kann sich im Hinblick auf eine präzise und ruckelfreie Führung der Paneele an dem Schienensystem anbieten. Ganz grundsätzlich ist mit dem einer Führungseinrichtung zugeordneten Paneel insbesondere das Paneel gemeint, an dem die Führungseinrichtung montiert ist. Ebenso ist mit der einer Führungseinrichtung zugeordneten Montageeinrichtung ganz grundsätzlich insbesondere die Montageeinrichtung gemeint, an der die Führungseinrichtung montiert ist.

Bei einer ersten besonders bevorzugten Ausgestaltung des Nutzfahrzeugaufbaus weisen die Führungseinrichtungen jeweils wenigstens ein Führungselement zum Kontaktieren des Schienensystems und ein Halteelement auf, das das Führungselement hält und an der der jeweiligen Führungseinrichtung zugeordneten Montageeinrichtung, insbesondere form- und/oder kraftschlüssig, montiert ist. Dies kann einfach und zweckmäßig sein. Die Führungselemente können dann aus demselben Grund zudem als Führungsrollen zum Abrollen an dem Schienensystem ausgebildet sein. Beim Verstellen des Wandelements von der Schließstellung in die Offenstellung und zurück können dann die Führungselemente das Schienensystem wenigstens zeitweise kontaktieren, vorzugsweise die Führungsrollen wenigstens zeitweise an dem Schienensystem abrollen.

Grundsätzlich unabhängig davon, ob die Führungseinrichtungen ein Führungselement und ein Halteelement aufweisen oder nicht, können die Führungseinrichtungen, insbesondere die Halteelemente der Führungseinrichtungen, jeweils wenigstens einen Montageabschnitt aufweisen, der mit der der jeweiligen Führungseinrichtung zugeordneten Montageeinrichtung des Paneels verbunden ist. Dies ermöglicht auf einfache Weise eine stabile Montage der Führungseinrichtungen. Aus demselben Grund kann es sich besonders anbieten, wenn die Führungseinrichtungen jeweils wenigstens zwei mit der zugeordneten Montageeinrichtung des Paneels verbundene Montageabschnitte aufweisen. Dann können die zwei Montageabschnitte jeder der Führungseinrichtungen aus demselben Grund zudem auf gegenüberliegenden Seiten der jeweiligen Führungseinrichtung angeordnet sein. Unabhängig davon, ob die Führungseinrichtungen jeweils einen oder zwei Montageabschnitte aufweisen, können wenigstens die Montageabschnitte der verschiedenen Führungseinrichtungen wenigstens im Wesentlichen gleichartig ausgebildet sein. So wird auf konstruktiv einfache Weise eine Montage der Führungseinrichtungen an der der wenigstens einen anderen Führungseinrichtung zugeordneten Montageeinrichtung ermöglicht. Dabei müssen die Montageabschnitte nicht zwingend identisch ausgebildet sein. Vielmehr können geringe Abweichungen etwa in einzelnen Abmessungen unter den Montageabschnitten der verschiedenen Führungseinrichtungen toleriert werden, solange diese die Montage der Führungseinrichtungen an der wenigstens einen der wenigstens einen anderen Führungseinrichtung zugeordneten Montageeinrichtung nicht beeinträchtigen. Besonders einfach in der Herstellung und mithin kostengünstig kann es jedoch sein, wenn die Montageabschnitte der verschiedenen Führungseinrichtungen wenigstens im Wesentlichen identisch ausgebildet sind. Aus demselben Grund kann es sich umso mehr anbieten, wenn nicht nur die Montageabschnitte der Führungseinrichtungen, sondern wenigstens die Halteelemente der verschiedenen Führungseinrichtungen wenigstens im Wesentlichen gleichartig, insbesondere wenigstens im Wesentlichen identisch, ausgebildet sind. Die Führungselemente der verschiedenen Führungseinrichtungen können dagegen grundsätzlich unterschiedlich ausgebildet sein, auch wenn dies nicht bevorzugt ist.

Grundsätzlich können die Halteelemente der Führungseinrichtungen in derselben Ausrichtung an der wenigstens einen der wenigstens einen auf einem anderen Höhenniveau angeordneten Führungseinrichtung zugeordneten Montageeinrichtung montierbar sein, in der die Halteelemente auch an der zugeordneten Montageeinrichtung montiert sind. Hinsichtlich einer präzisen und ruckelfreien Führung der Paneele entlang des Schienensystems kann es jedoch bevorzugt sein, wenn die Halteelemente der Führungseinrichtungen jeweils in einer ersten Ausrichtung an der zugeordneten Montageeinrichtung montiert sind und in einer zweiten Ausrichtung, die gegenüber der ersten Ausrichtung gedreht ist, an der wenigstens einen Montageeinrichtung form- und/oder kraftschlüssig montierbar sind, die der wenigstens einen auf einem anderen Höhenniveau angeordneten Führungseinrichtung zugeordnet ist. Dies ermöglicht eine im Hinblick auf eine präzise und ruckelfreie Führung der Paneele optimierte Ausrichtung der Halteelemente und mithin optimierte Anordnung der von den Halteelementen gehaltenen Führungselemente unabhängig davon, an welcher Montageeinrichtung die Halteelemente montiert werden. Aus demselben Grund kann es sich dann weiter anbieten, wenn die zweite Ausrichtung um wenigstens 90° gegenüber der ersten Ausrichtung gedreht ist. Besonders bevorzugt kann es in diesem Zusammenhang sein, wenn die zweite Ausrichtung wenigstens im Wesentlichen um 180° gegenüber der ersten Ausrichtung gedreht ist.

Hinsichtlich einer präzisen und ruckelfreien Führung der Paneele kann es sich alternativ oder zusätzlich auch anbieten, wenn wenigstens eine, bevorzugt mehrere, obere der, insbesondere auf unterschiedlichen Höhenniveaus angeordneten, Führungseinrichtungen wenigstens in der Schließstellung des Wandelements wenigstens teilweise oberhalb der Mitte des der jeweiligen Führungseinrichtung zugeordneten Paneels angeordnet ist. Aus demselben Grund kann es sich besonders anbieten, wenn die wenigstens eine obere Führungseinrichtung wenigstens in der Schließstellung des Wandelements wenigstens teilweise im oberen Randbereich des zugeordneten Paneels angeordnet ist. Unabhängig davon kann die wenigstens eine obere Führungseinrichtung der Einfachheit halber und zugleich zweckmäßig nicht nur wenigstens teilweise, sondern wenigstens im Wesentlichen oberhalb der Mitte, insbesondere im oberen Randbereich, des zugeordneten Paneels angeordnet sein. Alternativ oder zusätzlich zu der wenigstens einen oberen Führungseinrichtung kann auch wenigstens eine, bevorzugt mehrere, untere der, insbesondere auf unterschiedlichen Höhenniveaus angeordneten, Führungseinrichtungen wenigstens in der Schließstellung des Wandelements wenigstens teilweise unterhalb der Mitte des der jeweiligen Führungseinrichtung zugeordneten Paneels angeordnet sein. Auch dies kann zu einer präzisen und ruckelfreien Führung der Paneele beitragen. Dann kann es sich aus demselben Grund weiter anbieten, wenn die wenigstens eine untere Führungseinrichtung wenigstens in der Schließstellung des Wandelements wenigstens teilweise im unteren Randbereich des zugeordneten Paneels angeordnet ist. Alternativ oder zusätzlich kann die wenigstens eine untere Führungseinrichtung einfach und gleichzeitig zweckmäßig nicht nur wenigstens teilweise, sondern wenigstens im Wesentlichen unterhalb der Mitte, insbesondere im unteren Randbereich, des zugeordneten Paneels angeordnet sein.

Unabhängig von der Anordnung der Führungseinrichtungen bezogen auf das jeweils zugeordnete Paneel kann es sich im Hinblick auf eine präzise und ruckelfreie Führung der Paneele auch anbieten, wenn an einer Mehrzahl, vorzugsweise an wenigstens drei, insbesondere an wenigstens fünf, der Paneele jeweils wenigstens eine der Führungseinrichtungen montiert ist. Es kann auch wenigstens an einem überwiegenden Teil der Paneele, beispielsweise wenigstens an jedem zweiten der Paneele, jeweils wenigstens eine der Führungseinrichtungen montiert sein. So wird eine besonders präzise und ruckelfreie Führung der Paneele ermöglicht. Dies gilt umso mehr, wenn wenigstens im Wesentlichen an jedem der Paneele, insbesondere an jedem der Paneele mit Ausnahme des obersten Paneels des Wandelements, jeweils wenigstens eine der Führungseinrichtungen montiert ist. Auch am obersten Paneel kann wenigstens eine Führungseinrichtung montiert sein. Diese wird aus konstruktiven Gründen vorzugsweise jedoch anders ausgebildet sein als die an den übrigen Paneelen montierten Führungseinrichtungen. Unabhängig davon kann es sich hinsichtlich einer präzisen und ruckelfreien Führung der Paneele auch anbieten, wenn es sich bei den genannten Führungseinrichtungen jeweils um eine der oberen Führungseinrichtungen handelt. Alternativ oder zusätzlich kann es aus demselben Grund vorteilhaft sein, wenn an den genannten Paneelen nicht nur eine, sondern jeweils zwei der, insbesondere oberen, Führungseinrichtungen an gegenüberliegenden Längsenden des jeweiligen Paneels montiert sind.

Hinsichtlich einer präzisen und ruckelfreien Führung der Paneele an dem Schienensystem kann es sich alternativ oder zusätzlich zu einer Montage jeweils wenigstens einer Führungseinrichtung an einer Mehrzahl der Paneele auch anbieten, wenn an wenigstens einem der Paneele wenigstens zwei der Führungseinrichtungen montiert sind, die wenigstens in der Schließstellung des Wandelements wenigstens abschnittsweise, insbesondere wenigstens im Wesentlichen, auf unterschiedlichen Höhenniveaus angeordnet sind. Dies bietet sich besonders bei dem untersten Paneel des Wandelements an, da dieses Paneel nach unten hin nicht indirekt über ein weiteres Paneel an dem Schienensystem geführt werden kann. Unabhängig davon kann es sich aus dem genannten Grund zudem anbieten, wenn an dem genannten Paneel wenigstens eine der wenigstens einen oberen Führungseinrichtung und wenigstens eine der wenigstens einen unteren Führungseinrichtung montiert sind. Besonders bevorzugt ist es vor dem genannten Hintergrund, wenn an dem genannten Paneel zwei der oberen Führungseinrichtungen an gegenüberliegenden Längsenden des Paneels montiert sind und/oder zwei der unteren Führungseinrichtungen an gegenüberliegenden Längsenden des Paneels montiert sind. Grundsätzlich können auch an einer Mehrzahl der Paneele jeweils wenigstens zwei der Führungseinrichtungen wenigstens abschnittsweise auf unterschiedlichen Höhenniveaus bezogen auf die Schließstellung des Wandelements montiert sein. Es kann jedoch kostengünstig und zugleich im Hinblick auf eine präzise und ruckelfreie Führung der Paneele ausreichend sein, wenn dies lediglich bei einem, insbesondere dem untersten, der Paneele der Fall ist.

Hinsichtlich einer einfachen und zugleich stabilen Montage der Führungseinrichtungen kann es vorteilhaft sein, wenn ein Montageabschnitt jeder Führungseinrichtung formschlüssig und ein anderer Montageabschnitt jeder Führungseinrichtung kraftschlüssig mit der der jeweiligen Führungseinrichtung zugeordneten Montageeinrichtung des Paneels verbunden ist. Dann kann es sich bei den Montageabschnitten vorteilhafterweise um die vorgenannten Montageabschnitte handeln, zwingend erforderlich ist dies jedoch nicht. Unabhängig davon können die formschlüssig verbundenen Montageabschnitte der Einfachheit halber ausschließlich formschlüssig mit der jeweils zugeordneten Montageeinrichtung des Paneels verbunden sein. Die kraftschlüssig verbundenen Montageabschnitte können dagegen nicht nur der Einfachheit halber, sondern auch aus Stabilitätsgründen zusätzlich formschlüssig mit der jeweils zugeordneten Montageeinrichtung des Paneels verbunden sein.

Grundsätzlich unabhängig von einer formschlüssigen und kraftschlüssigen Verbindung kann es die Montage der Führungseinrichtungen auch vereinfachen, wenn ein Montageabschnitt jeder Führungseinrichtung einen Anschlag zum Ausrichten eines anderen Montageabschnitts der jeweiligen Führungseinrichtung gegenüber der zugeordneten Montageeinrichtung des Paneels aufweist. Dann kann es sich bei den Montageabschnitten bevorzugt um welche der vorgenannten Montageabschnitte handeln, auch wenn dies nicht zwingend erforderlich ist. Besonders kann es sich aus dem genannten Grund anbieten, wenn es sich bei den die Anschläge aufweisenden Montageabschnitten um die, insbesondere ausschließlich, formschlüssig verbundenen Montageabschnitte und bei den auszurichtenden Montageabschnitten um die kraftschlüssig verbundenen Montageabschnitte handelt.

Eine einfach herzustellende und zugleich stabile formschlüssige Verbindung zwischen den Führungseinrichtungen und dem jeweils zugeordneten Paneel wird ermöglicht, wenn die Führungseinrichtungen jeweils einen Montageabschnitt aufweisen, der eine Hinterschneidung der der Führungseinrichtung zugeordneten Montageeinrichtung des Paneels formschlüssig hintergreift. Auch hier kann es sich bei den Montageabschnitten bevorzugt um welche der vorgenannten handeln, zwingend erforderlich ist dies jedoch auch hier nicht. Unabhängig davon kann der Formschluss zweckmäßigerweise wenigstens in einer Richtung wenigstens im Wesentlichen senkrecht zu dem jeweiligen Paneel wirken. Grundsätzlich unabhängig von der Richtung des Formschlusses kann eine besonders einfache Herstellung der formschlüssigen Verbindungen ermöglicht werden, wenn sich die Hinterschneidungen des wenigstens einen Paneels schräg zum jeweiligen Paneel erstrecken. Alternativ oder zusätzlich kann es sich aus demselben Grund auch anbieten, wenn sich die die Hinterschneidungen hintergreifenden Montageabschnitte der Führungseinrichtungen schräg zum jeweils zugeordneten Paneel erstrecken. Dabei können sich die schrägen Hinterschneidungen des wenigstens einen Paneels zweckmäßigerweise in einem Winkel von wenigstens 10°, vorzugsweise wenigstens 20°, insbesondere wenigstens 30°, und/oder höchstens 80°, vorzugsweise höchstens 70°, insbesondere höchstens 60°, schräg zu dem jeweiligen Paneel erstrecken. Grundsätzlich unabhängig vom Winkel der schrägen Hinterschneidungen können sich die schrägen Montageabschnitte der Führungseinrichtungen zweckmäßigerweise in einem Winkel von wenigstens 10°, vorzugsweise wenigstens 20°, insbesondere wenigstens 30°, und/oder höchstens 80°, vorzugsweise höchstens 70°, insbesondere höchstens 60°, schräg zu dem jeweils zugeordneten Paneel erstrecken. Unabhängig vom Winkelbetrag kann es sich hinsichtlich einer einfachen und zugleich stabilen Montage auch anbieten, wenn der Winkel der schrägen Hinterschneidungen des wenigstens einen Paneels zum jeweiligen Paneel und der Winkel der schrägen Montageabschnitte der Führungseinrichtungen zum jeweils zugeordneten Paneel wenigstens im Wesentlichen gleich groß ist.

Alternativ oder zusätzlich zu einer schrägen Erstreckung können sich die Hinterschneidungen des wenigstens einen Paneels konstruktiv einfach jeweils wenigstens im Wesentlichen in Längsrichtung des jeweiligen Paneels erstrecken.

Unabhängig von einer Erstreckung in Längsrichtung können die Hinterschneidungen des wenigstens einen Paneels auch konstruktiv einfach jeweils durch eine Nut des jeweiligen Paneels gebildet sein. Dann kann es zudem weiter vorteilhaft sein, wenn wenigstens eine der die Hinterschneidungen bildenden Nuten des wenigstens einen Paneels und wenigstens der die jeweilige Hinterschneidung hintergreifende Montageabschnitt der wenigstens einen Führungseinrichtung korrespondierende Querschnitte aufweisen. Dies ermöglicht eine einfache Montage des Montageabschnitts in der Nut bei gleichzeitig stabilem Sitz in der Nut. Aus demselben Grund kann es sich besonders anbieten, wenn eine Mehrzahl, vorzugsweise wenigstens im Wesentlichen jede, der die Hinterschneidungen bildenden Nuten des wenigstens einen Paneels und wenigstens die die jeweiligen Hinterschneidungen hintergreifenden Montageabschnitte der Führungseinrichtungen korrespondierende Querschnitte aufweisen. Beispielsweise können die die Hinterschneidungen hintergreifenden Montageabschnitte der oberen Führungseinrichtungen und die die jeweiligen Hinterschneidungen bildenden Nuten des wenigstens einen Paneels korrespondierende Querschnitte aufweisen. Die die Hinterschneidungen hintergreifenden Montageabschnitte der unteren Führungseinrichtungen und die die jeweiligen Hinterschneidungen bildenden Nuten des wenigstens einen Paneels können dagegen aus konstruktiven Gründen nicht zueinander korrespondierende Querschnitte aufweisen. Ganz grundsätzlich sind mit korrespondierenden Querschnitten vorzugsweise Querschnitte gemeint, die wenigstens im Wesentlichen die gleiche Form und/oder wenigstens im Wesentlichen gleiche Abmessungen aufweisen.

Alternativ oder zusätzlich zu dem die Hinterschneidung hintergreifenden Montageabschnitt können die Führungseinrichtungen jeweils einen Montageabschnitt aufweisen, der mittels wenigstens eines separaten Montagemittels mit der der jeweiligen Führungseinrichtung zugeordneten Montageeinrichtung des Paneels form- und/oder kraftschlüssig verbunden ist. Verbindungen über separate Montagemittel und insbesondere wenigstens teilweise kraftschlüssige Verbindungen über separate Montagemittel sind zwar typischerweise aufwendiger in der Fertigung, ermöglichen jedoch auch eine besonders stabile Montage. Dies gilt umso mehr, wenn ein Montageabschnitt jeder Führungseinrichtung mittels wenigstens zwei separaten Montagemitteln mit der zugeordneten Montageeinrichtung des Paneels form- und/oder kraftschlüssig verbunden ist. Alternativ oder zusätzlich kann es sich bei den separaten Montagemitteln einfach und zweckmäßig um Schrauben, Niete und/oder Bolzen handeln. Niete lassen sich einfach montieren, Bolzen können meist größere Kräfte aufnehmen und Schrauben ermöglichen nicht nur eine besonders zuverlässige kraftschlüssige Verbindung, sondern auch eine lösbare Befestigung, was sich hinsichtlich eines einfachen Nachjustierens und/oder Austauschs der Führungseinrichtungen anbieten kann. Unabhängig von ihrer Ausgestaltung können die separaten Montagemittel jeweils in eine Nut des der jeweiligen Führungseinrichtung zugeordneten Paneels eingreifen. So kann die Montage der Führungseinrichtungen mittels der separaten Montagemittel an dem wenigstens einen Paneel vereinfacht werden, ohne den Fertigungsaufwand für das wenigstens eine Paneels wesentlich zu erhöhen. Dabei können die Nuten vorzugsweise als T-Nuten ausgebildet sein. Dann können die Nuten also insbesondere einen wenigstens im Wesentlichen T-förmigen Querschnitt aufweisen. T-Nuten ermöglichen auf konstruktiv einfache Weise eine stabile Montage der Führungseinrichtungen mittels der separaten Montagemittel. Unabhängig von deren Querschnittsform können sich die Nuten des wenigstens einen Paneels auch konstruktiv einfach und zugleich zweckmäßig jeweils wenigstens im Wesentlichen in Längsrichtung des jeweiligen Paneels erstrecken. Alternativ oder zusätzlich zu einer Erstreckung der Nuten in Längsrichtung kann es sich im Falle einer Ausbildung der separaten Montagemittel als Schrauben anbieten, wenn diese jeweils mit einem in der Nut des zugeordneten Paneels gehaltenen Nutenstein verschraubt sind. So wird in einfacher Weise eine flexible und zugleich stabile Verschraubung ermöglicht. Dabei können Schrauben, die zur Montage derselben Führungseinrichtung dienen, mit demselben Nutenstein verschraubt sein, zwingend erforderlich ist dies jedoch nicht.

Die Halteelemente der Führungseinrichtungen können konstruktiv einfach und zugleich zweckmäßig als Halteprofile ausgebildet sein. Aus demselben Grund können sich die Halteprofile dann zudem jeweils wenigstens im Wesentlichen in Längsrichtung des zugeordneten Paneels erstrecken. Unabhängig von einer Erstreckung in Längsrichtung des zugeordneten Paneels können die Halteprofile kompakt, platzsparend und zugleich besonders zweckmäßig ausgebildet werden, wenn die Halteprofile jeweils, vorzugsweise wenigstens im Wesentlichen über die gesamte Längserstreckung des jeweiligen Halteprofils, einen wenigstens im Wesentlichen dreieckigen Querschnitt aufweisen. Dann kann es sich weiter anbieten, wenn der dreieckige Querschnitt jedes Halteprofils eine von dem dem jeweiligen Halteprofil zugeordneten Paneel weg weisende Ecke aufweist, die abgerundet sein kann. So kann die Wahrscheinlichkeit von Verletzungen und Beschädigungen der Ladung an den Halteprofilen verringert werden.

Alternativ oder zusätzlich zu einer Ausbildung als Halteprofil können die Halteelemente der Führungseinrichtungen jeweils mit ihrer Rückseite an der Innenseite des der jeweiligen Führungseinrichtung zugeordneten Paneels anliegen. Dann muss kein weiteres Bauteil zwischen den Halteelementen und dem jeweils zugeordneten Paneel vorgesehen sein. Dies gilt insbesondere, wenn die Rückseiten der Halteelemente jeweils flächig an der Innenseite des zugeordneten Paneels anliegen. Zudem wird auf diese Weise eine dauerhafte und stabile Verbindung zwischen den Halteelementen und dem jeweils zugeordneten Paneel ermöglicht. Alternativ oder zusätzlich zu einer flächigen Anlage kann es einfach und zweckmäßig sein, wenn die Rückseiten der Halteelemente jeweils in einer Anlageebene an dem zugeordneten Paneel anliegen, die wenigstens im Wesentlichen parallel zu dem Paneel angeordnet ist. Dann kann es sich hinsichtlich einer einfachen und zugleich stabilen Montage der Halteelemente an dem wenigstens einen Paneel weiter anbieten, wenn sich ein mit dem jeweils zugeordneten Paneel verbundener Montageabschnitt jedes Halteelements in Richtung des jeweiligen Paneels über die Anlageebene hinaus erstreckt. Dabei kann es sich bei den Montageabschnitten bevorzugt um welche der vorgenannten Montageabschnitte handeln. Zwingend erforderlich ist dies jedoch nicht. Besonders bevorzugt kann es aus dem genannten Grund sein, wenn es sich bei den über die Anlageebene hinaus erstreckenden Montageabschnitten um die die Hinterschneidungen des jeweils zugeordneten Paneels hintergreifenden Montageabschnitte der Führungseinrichtungen handelt.

Unabhängig von der Ausgestaltung der Führungseinrichtungen kann auf kostengünstige Weise eine flexible Montage der Führungseinrichtungen an dem wenigstens einen Paneel ermöglicht werden, wenn sich die Montageeinrichtungen des wenigstens einen Paneels jeweils wenigstens im Wesentlichen über die gesamte Längserstreckung des jeweiligen Paneels erstrecken. Dann können die Führungseinrichtungen an unterschiedlichen Stellen der Montageeinrichtungen und/oder auch mehrere der Führungseinrichtungen an derselben Montageeinrichtung montiert werden. Beispielsweise kann dann jede der Führungseinrichtungen mit wenigstens einer anderen der Führungseinrichtungen an derselben Montageeinrichtung montiert sein. Besonders zweckmäßig kann es sein, wenn jede der Führungseinrichtungen mit wenigstens einer anderen der Führungseinrichtungen an gegenüberliegenden Längsenden derselben Montageeinrichtung montiert ist.

Hinsichtlich eines flexiblen Einsatzes der Paneele und mithin einer kostengünstigen Fertigung des Rolltors kann es sich anbieten, wenn die Paneele jeweils wenigstens zwei wenigstens in der Schließstellung des Wandelements wenigstens abschnittsweise auf unterschiedlichen Höhenniveaus angeordnete Montageeinrichtungen jeweils zum form- und/oder kraftschlüssigen Montieren wenigstens einer der Führungseinrichtungen aufweisen. Dann muss bei der Fertigung des Rolltors vorzugsweise nicht darauf geachtet werden, welches Paneel an welcher Stelle des Wandelements verwendet wird. Vielmehr kann vorzugsweise jedes Paneel an jeder Stelle des Rolltors verwendet werden. Unabhängig davon handelt es sich bei den Montageeinrichtungen vorzugsweise wenigstens teilweise um die vorstehend genannten Montageeinrichtungen. Dabei ist es grundsätzlich denkbar, dass an jeder der Montageeinrichtungen jeweils wenigstens eine der Führungseinrichtungen form- und/oder kraftschlüssig montiert ist. Angesichts des genannten Vorteils kann es jedoch auch in Kauf genommen werden, wenn an wenigstens einer der Montageeinrichtungen, vorzugsweise an wenigstens einer der Montageeinrichtungen wenigstens im Wesentlichen jedes der Paneele, insbesondere jedes der Paneele bis auf das unterste und/oder oberste Paneel des Wandelements, keine Führungseinrichtung montiert ist. Dies kann sogar aus Kostengründen bevorzugt und im Hinblick auf eine präzise und ruckelfreie Führung der Paneele an dem Schienensystem ausreichend sein. Unabhängig davon kann es zweckmäßig sein, wenn die verschiedenen Montageeinrichtungen jedes Paneels wenigstens in der Schließstellung des Wandelements nicht nur abschnittsweise, sondern wenigstens im Wesentlichen auf unterschiedlichen Höhenniveaus angeordnet sind. Alternativ oder zusätzlich kann es sich aus demselben Grund anbieten, wenn die Montageeinrichtungen jedes der Paneele wenigstens eine obere Montageeinrichtung umfassen, die wenigstens in der in der Schließstellung des Wandelements wenigstens abschnittsweise in einer oberen Hälfte des jeweiligen Paneels angeordnet ist. Besonders zweckmäßig können die oberen Montageeinrichtungen dann wenigstens in der Schließstellung des Wandelements wenigstens abschnittsweise in einem oberen Randbereich des jeweiligen Paneels angeordnet sein. Unabhängig davon kann es auch besonders zweckmäßig sein, wenn die oberen Montageeinrichtungen wenigstens in der Schließstellung des Wandelements nicht nur abschnittsweise, sondern wenigstens im Wesentlichen in der oberen Hälfte, insbesondere im oberen Randbereich, des jeweiligen Paneels angeordnet sind. Alternativ oder zusätzlich zu einer oberen Montageeinrichtung können die Montageeinrichtungen jedes der Paneele zweckmäßigerweise auch wenigstens eine untere Montageeinrichtung umfassen, die wenigstens in der Schließstellung des Wandelements wenigstens abschnittsweise in einer unteren Hälfte des jeweiligen Paneels angeordnet ist. Besonders zweckmäßig können die unteren Montageeinrichtungen dann wenigstens in der Schließstellung des Wandelements wenigstens abschnittsweise in einem unteren Randbereich des jeweiligen Paneels angeordnet sein. Unabhängig davon kann es auch besonders zweckmäßig sein, wenn die unteren Montageeinrichtungen wenigstens in der Schließstellung des Wandelements nicht nur abschnittsweise, sondern wenigstens im Wesentlichen in der unteren Hälfte, insbesondere im unteren Randbereich, des jeweiligen Paneels angeordnet sind.

Unabhängig davon, ob die Paneele jeweils zwei auf unterschiedlichen Höhenniveaus angeordnete Montageeinrichtungen aufweisen oder nicht, kann wenigstens eine der Montageeinrichtungen des wenigstens einen Paneels wenigstens teilweise durch wenigstens einen Verbindungsabschnitt des jeweiligen Paneels gebildet sein, der mit einem der anderen Paneele oder mit einem Dichtelement verbunden ist. Dies kann sich nicht nur konstruktiv anbieten, sondern auch eine Montage wenigstens einer der Führungseinrichtungen besonders nah am Rand des Paneels ermöglichen, was sich hinsichtlich einer präzisen und ruckelfreien Führung des Paneels an dem Schienensystem anbieten kann. Dies gilt insbesondere, wenn es sich bei der wenigstens einen Montageeinrichtung um die der wenigstens einen unteren Führungseinrichtung zugeordnete Montageeinrichtung handelt. Alternativ oder zusätzlich kann es sich vor dem genannten Hintergrund auch besonders anbieten, wenn die unteren Montageeinrichtungen der Paneele jeweils wenigstens teilweise durch einen mit einem der anderen Paneele oder mit einem Dichtelement verbundenen Verbindungsabschnitt des jeweiligen Paneels gebildet sind. Unabhängig davon kann es sich konstruktiv zusätzlich anbieten, wenn wenigstens die Hinterschneidung, insbesondere wenigstens die die Hinterschneidung bildende Nut, der wenigstens einen Montageeinrichtung durch den wenigstens einen Verbindungsabschnitt gebildet wird. Grundsätzlich ist es auch denkbar, dass die wenigstens eine Montageeinrichtung wenigstens im Wesentlichen insgesamt durch den wenigstens einen Verbindungsabschnitt gebildet wird. Konstruktiv bevorzugt ist dies jedoch nicht. Unabhängig davon, welcher Teil der wenigstens einen Montageeinrichtung durch den wenigstens einen Verbindungsabschnitt gebildet wird, kann der wenigstens eine Verbindungsabschnitt konstruktiv einfach und zugleich zweckmäßig als Verbindungsprofil ausgebildet sein. Alternativ oder zusätzlich kann es sich aus demselben Grund anbieten, wenn der wenigstens eine Verbindungsabschnitt wenigstens formschlüssig mit dem anderen Paneel oder dem Dichtelement verbunden ist. Unabhängig davon kann das Dichtelement zweckmäßigerweise zum Abdichten des Rolltors zu einem Ladeboden des Nutzfahrzeugaufbaus und/oder zu einem unteren Abschnitt eines Rückwandrahmens des Nutzfahrzeugaufbaus ausgebildet sein. Dabei kann das Dichtelement bevorzugt als Dichtleiste ausgebildet sein, die sich wenigstens im Wesentlichen über die gesamte Längserstreckung des mit dieser verbundenen Paneels erstrecken kann.

Für das Be- und/oder Entladen des Nutzfahrzeugaufbaus ist es besonders bevorzugt, wenn das Rolltor an der Rückwand des Nutzfahrzeugaufbaus vorgesehen ist. Dabei ist das Rolltor vor Beschädigung von außen gut geschützt, wenn das Rolltor wenigstens teilweise in einem Rückwandrahmen der Rückwand des Nutzfahrzeugaufbaus aufgenommen ist. Grundsätzlich wird es aber zum Zwecke der Führung des Wandelements beim Verstellen in die Offenstellung bevorzugt sein, wenn ein Teil des Schienensystems außerhalb des Rückwandrahmens angeordnet ist, und zwar insbesondere im Bereich des Dachs des Nutzfahrzeugaufbaus. Grundsätzlich unabhängig von einer Anordnung an der Rückwand kann das Rolltor besonders zweckmäßig in einem Kofferaufbau zum Einsatz kommen. Der Kofferaufbau umfasst dabei vorzugsweise feste Seitenwände, eine feste Stirnwand und ein festes Dach.

Nachfolgend wird die Erfindung anhand einer lediglich ein Ausführungsbeispiel darstellenden Zeichnung näher erläutert. In der Zeichnung zeigt jeweils schematisch
- Fig. 1: ein erfindungsgemäßes Nutzfahrzeug mit einem erfindungsgemäßen Nutzfahrzeugaufbau in einer perspektivischen Ansicht,
- Fig. 2: ein Detail des Nutzfahrzeugaufbaus aus Fig. 1 im Bereich eines Rolltors in einer perspektivischen Schnittansicht von innen,
- Fig. 3: ein Abschnitt des Rolltors aus Fig. 1 in einer seitlichen Schnittansicht,
- Fig. 4: ein Detail des Nutzfahrzeugaufbaus aus Fig. 1 im Bereich einer oberen Führungseinrichtung des Rolltors in einer seitlichen Schnittansicht und
- Fig. 5: ein Detail des Nutzfahrzeugaufbaus aus Fig. 1 im Bereich einer unteren Führungseinrichtung des Rolltors in einer seitlichen Schnittansicht.

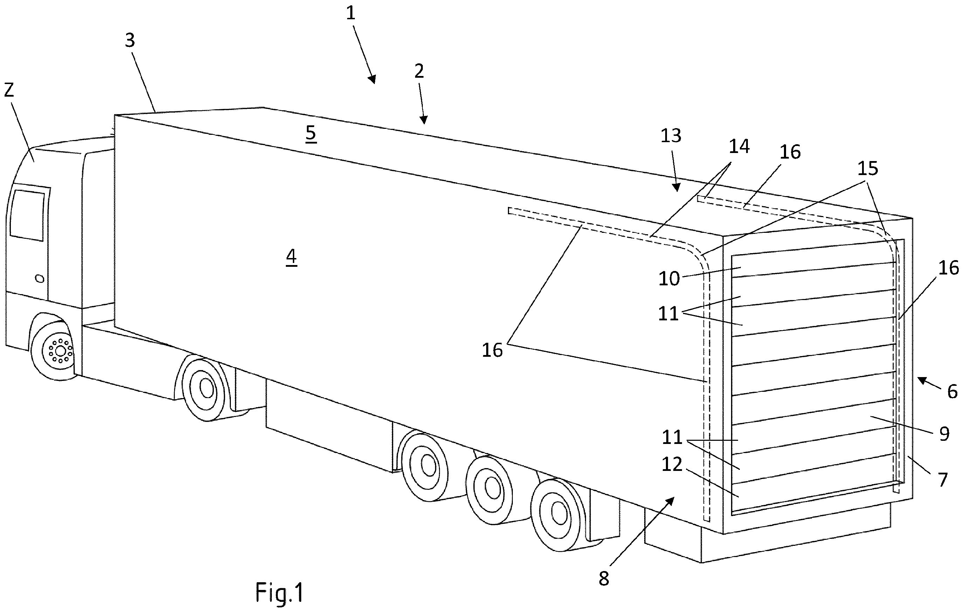

In der Fig. 1 ist ein von einer Zugmaschine Z gezogenes Nutzfahrzeug 1 in Form eines Sattelaufliegers 1 mit einem Nutzfahrzeugaufbau 2 in Form eines Kofferaufbaus mit einer festen Stirnwand 3, festen Seitenwänden 4 und einem festen Dach 5 dargestellt. Die Rückwand 6 des Nutzfahrzeugaufbaus 2 wird durch einen Rückwandrahmen 7 und ein Rolltor 8 gebildet, das teilweise im Rückwandrahmen 7 aufgenommen ist. Das Rolltor 8 umfasst ein Wandelement 9, das aus einem obersten Paneel 10, mehreren mittleren Paneelen 11 und einem untersten Paneel 12 zusammengesetzt ist und sich entlang eines Schienensystems 13 umfassend zwei Schienenelemente 14 an beiden Seiten des Rolltors 8 nach oben und wieder zurück nach unten verstellen lässt. In der oberen Offenstellung des Wandelements 9 gibt das Wandelement 9 den Rückwandrahmen 7 wenigstens bereichsweise zum Be- und/oder Entladen eines Laderaums des Nutzfahrzeugsaufbaus 2 frei. Das Wandelement 9 ist dann wenigstens im Wesentlichen unter dem Dach 5 angeordnet. Zu diesem Zweck umfassen die Schienenelemente 14 des Schienensystems 13 bogenförmige Schienenabschnitte 15 im Verbindungsbereich von Dach 5 und Rückwandrahmen 7. Außerhalb dieser bogenförmigen Schienenabschnitte 15 erstrecken sich die Schienenabschnitte 16 der Schienenelemente 14 des Schienensystems 13 des dargestellten und insoweit bevorzugten Nutzfahrzeugaufbaus 2 wenigstens im Wesentlichen geradlinig. In der unteren Schließstellung des Wandelements 9 verschließt das Wandelement 9 die Rückwand 6. In dieser Stellung ist das Wandelement 9 wenigstens im Wesentlichen parallel zum Rückwandrahmen 7 ausgerichtet und lässt sich das Wandelement 9 am unteren Rand des Rückwandrahmens 7 verriegeln.

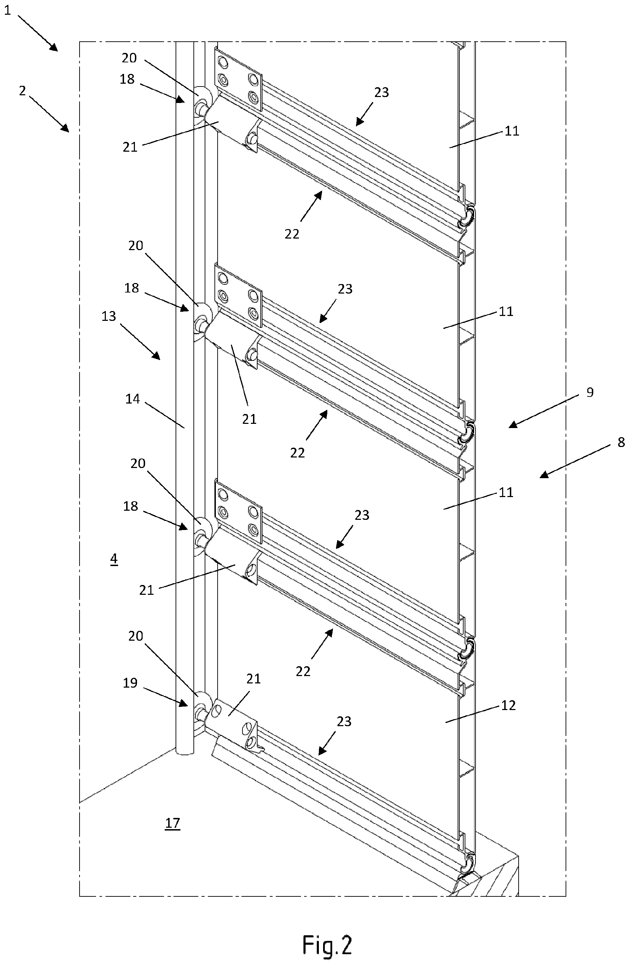

In der Fig. 2 ist ein Detail des Nutzfahrzeugs 1 im Bereich des Rückwandrahmens 7 mit dem unteren Ende des Rolltors 8 aus dem Laderaum 17 heraus gesehen dargestellt. Der besseren Übersichtlichkeit halber ist vorliegend lediglich der Verbindungsbereich des Rückwandrahmens 7 zu einer der Seitenwände 4 dargestellt. Der Verbindungsbereich des Rückwandrahmens 7 zu der gegenüberliegenden Seitenwand 4 ist jedoch gleichartig, insbesondere wenigstens im Wesentlichen spiegelsymmetrisch, zu dem dargestellten Verbindungsbereich ausgebildet.

Angrenzend an die Seitenwände 4 ist zu beiden Seiten des Wandelements 9 das die separaten Schienenelemente 14 an beiden Seiten des Nutzfahrzeugaufbaus 2 umfassende Schienensystem 13 vorgesehen. An den Schienenelementen 14 sind Führungseinrichtungen 18,19 geführt, die an den mittleren Paneelen 11 und dem untersten Paneel 12 des Wandelements 9 befestigt sind. Dabei sind im dargestellten und insoweit bevorzugten Ausführungsbeispiel an den mittleren Paneelen 11 jeweils an den gegenüberliegenden Längsenden des jeweiligen Paneels 11 zwei obere Führungseinrichtungen 18 vorgesehen, die in einem oberen Randbereich des jeweiligen Paneels 11 angeordnet sind. An dem untersten Paneel 12 sind vorliegend an den gegenüberliegenden Längsenden des Paneels 12 zwei in einem oberen Randbereich des Paneels 12 angeordnete obere Führungseinrichtungen 18 und zwei untere Führungseinrichtungen 19 vorgesehen, die in einem unteren Randbereich des Paneels 12 angeordnet sind. Die oberen Führungseinrichtungen 18 und die unteren Führungseinrichtungen 19 sind mithin bezogen auf das Paneel 11,12, an dem die jeweilige Führungseinrichtung 18,19 befestigt ist, auf unterschiedlichen Höhenniveaus angeordnet.

An dem vorliegend nicht dargestellten obersten Paneel 10 des Wandelements 9 können ebenfalls an den Schienenelementen 14 geführte Führungseinrichtungen befestigt sein. Diese Führungseinrichtungen sind aus konstruktiven Gründen jedoch vorzugsweise anders ausgebildet und anders an dem obersten Paneel 10 montiert als die dargestellten, an den mittleren Paneelen 11 und dem untersten Paneel 12 befestigten oberen und unteren Führungseinrichtungen 18,19.

Die Führungseinrichtungen 18,19 umfassen jeweils ein Führungselement 20 vorliegend in Form einer Führungsrolle 20, die über eine Drehachse an einem Halteelement 21 der jeweiligen Führungseinrichtung 18,19 gehalten ist. Beim Verstellen des Wandelements 9 zwischen der Schließstellung und der Offenstellung rollen die Führungsrollen 20 entlang des Schienensystems 13 bzw. der Schienenelemente 14 rauf und runter, wie die zugehörigen Paneele 11,12 nach oben und wieder nach unten verstellt werden.

Die Halteelemente 21 der Führungseinrichtungen 18,19 sind jeweils an einer dem jeweiligen Halteelement 21 zugeordneten Montageeinrichtung 22,23 eines der Paneele 11,12 form- und kraftschlüssig montiert. Konkret sind die Halteelemente 21 der oberen Führungseinrichtungen 18 jeweils an einer oberen Montageeinrichtung 22 montiert, die in einem oberen Randbereich des jeweils zugeordneten Paneels 11,12 angeordnet ist, und die Halteelemente 21 der unteren Führungseinrichtungen 19 jeweils an einer unteren Montageeinrichtung 23, die in einem unteren Randbereich des untersten Paneels 12 angeordnet ist. Die mittleren Paneele 11 weisen zusätzlich zu den oberen Montageeinrichtungen 22, an denen die oberen Führungseinrichtungen 18 montiert sind, jeweils auch eine im unteren Randbereich des jeweiligen Paneels 11 angeordnete untere Montageeinrichtung 23 auf.

Im dargestellten und insoweit bevorzugten Ausführungsbeispiel sind an den unteren Montageeinrichtungen 23 der mittleren Paneele 11 keine Führungseinrichtungen montiert. Die unteren Montageeinrichtungen 23 der mittleren Paneele 11 sind jedoch derart korrespondierend zu den an der unteren Montageeinrichtung 23 des untersten Paneels 12 montierten unteren Führungseinrichtungen 19 ausgebildet, dass diese alternativ auch an den unteren Montageeinrichtungen 23 der mittleren Paneele 11 form- und kraftschlüssig montiert werden können. Die korrespondierende Ausbildung der Führungseinrichtungen 18,19 und der Montageeinrichtungen 22,23 der Paneele 11,12 ist jedoch nicht darauf beschränkt. Vielmehr sind die Führungseinrichtungen 18,19 und die Montageeinrichtungen 22,23 derart korrespondierend ausgebildet, dass jede der Führungseinrichtungen 18,19 an jeder der Montageeinrichtungen 22,23 form- und kraftschlüssig montiert werden kann.

Bei dem dargestellten und insoweit bevorzugten Rolltor 8 sind die Halteelemente 21 der oberen und unteren Führungseinrichtungen 18,19 wenigstens im Wesentlichen identisch ausgebildet. Dabei sind die Halteelemente 21 der oberen Führungseinrichtungen 18 vorliegend in einer ersten Ausrichtung und die Halteelemente 21 der unteren Führungseinrichtungen 19 in einer zweiten Ausrichtung an dem jeweils zugeordneten Paneel 11,12 angeordnet, die gegenüber der ersten Ausrichtung wenigstens im Wesentlichen um 180° gedreht ist. Zudem sind bei dem dargestellten und insoweit bevorzugten Rolltor 8 auch die oberen Montageeinrichtungen 22 der Paneele 11,12 untereinander und die unteren Montageeinrichtungen 23 der Paneele 11,12 untereinander wenigstens im Wesentlichen identisch ausgebildet.

Die Montageeinrichtungen 22,23 der mittleren Paneele 11 und des untersten Paneels 12 erstrecken sich vorliegend jeweils wenigstens im Wesentlichen über die gesamte Längserstreckung des jeweiligen Paneels 11,12. So wird ermöglicht, dass jede der Führungseinrichtungen 18,19 mit einer anderen der Führungseinrichtungen 18,19 an gegenüberliegenden Längsenden derselben Montageeinrichtung 22,23 montiert ist.

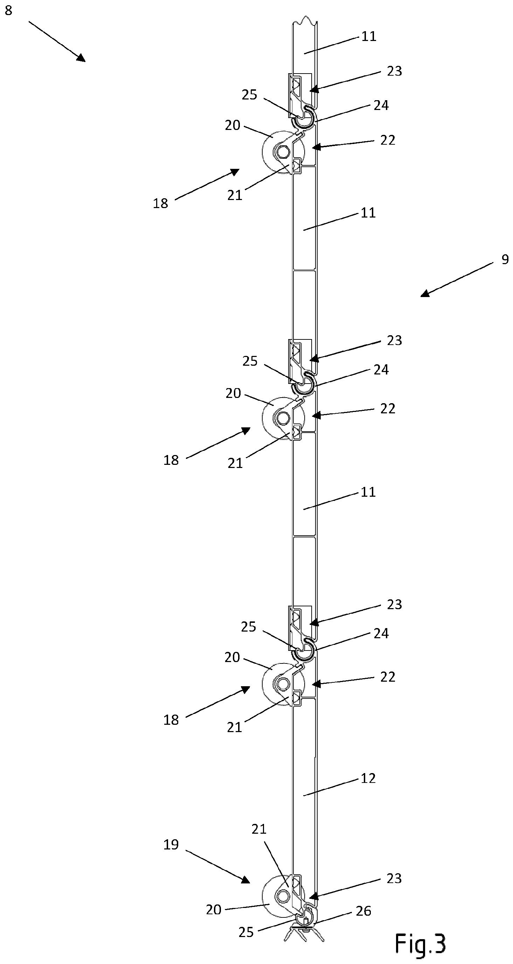

In der Fig. 3 sind das unterste Paneel 12 und drei der mittleren Paneele 11 (teilweise lediglich abschnittsweise) mit den daran montierten Führungseinrichtungen 18,19 dargestellt. Die Paneele 11,12 sind miteinander verbunden. Dabei werden die Verbindungen zwischen den Paneelen 11,12 durch obere Verbindungsabschnitte 24 in Form von oberen Verbindungsprofilen 24 und untere Verbindungsabschnitte 25 in Form von unteren Verbindungsprofilen 25 bereitgestellt, die formschlüssig ineinandergreifen. Die Verbindungen zwischen den Paneelen 11,12 ermöglichen es, dass die Paneele 11,12 um Schwenkachsen parallel zu den Paneelen 11,12 relativ zueinander geschwenkt werden können, wenn die Paneele 11,12 entlang der in der Fig. 3 nicht dargestellten bogenförmigen Schienenabschnitte 15 des Schienensystems 13 geführt werden.

Das unterste Paneel 12 weist zusätzlich zu dem oberen Verbindungsabschnitt 24 auch einen unteren Verbindungsabschnitt 25 ebenfalls in Form eines unteren Verbindungsprofils 25 auf. Dabei ist der untere Verbindungsabschnitt 25 des untersten Paneels 12 formschlüssig mit einem Dichtelement 26 verbunden, das vorliegend als Dichtleiste 26 ausgebildet ist, die sich wenigstens im Wesentlichen über die gesamte Längserstreckung des untersten Paneels 12 erstreckt. Die Dichtleiste 26 dient dazu, das Wandelement 9 in der Schließstellung gegenüber einem unteren Teil des Rückwandrahmens 7 und/oder dem Boden des Nutzfahrzeugaufbaus 2 abzudichten.

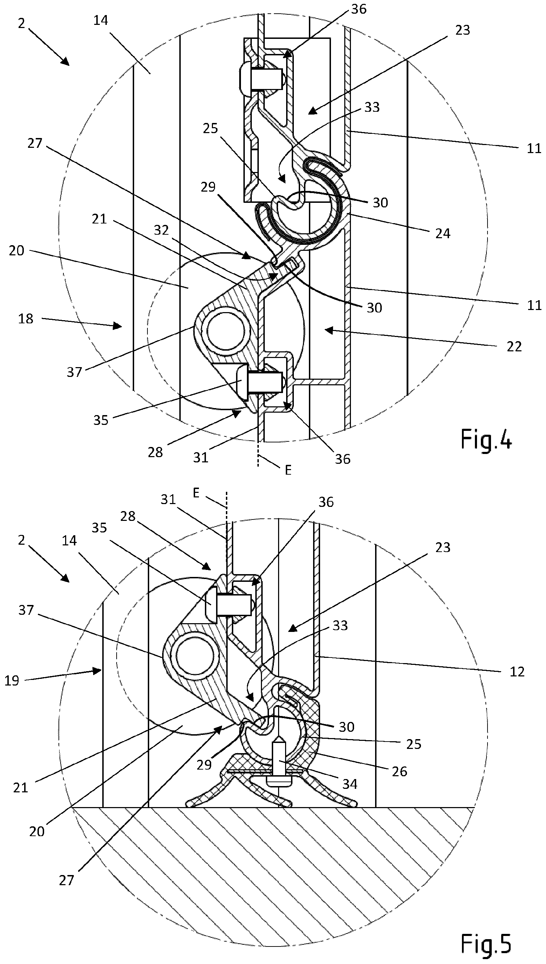

In den Fig. 4 und 5 sind Details des Nutzfahrzeugaufbaus 2 im Bereich einer der oberen Führungseinrichtungen 18 (Fig. 4) und im Bereich einer der unteren Führungseinrichtungen 19 (Fig. 5) dargestellt. Die wenigstens im Wesentlichen identisch ausgebildeten Halteelemente 21 der oberen und unteren Führungseinrichtungen 18,19 weisen jeweils zwei Montageabschnitte 27,28 auf, die auf gegenüberliegenden Seiten der jeweiligen Führungseinrichtung 18,19 angeordnet und mit der der jeweiligen Führungseinrichtung 18,19 zugeordneten Montageeinrichtung 22,23 des Paneels 11,12 verbunden sind. Dabei ist ein Montageabschnitt 27 jeder Führungseinrichtung 18,19 ausschließlich formschlüssig und der andere Montageabschnitt 28 jeder Führungseinrichtung 18,19 sowohl kraftschlüssig als auch formschlüssig mit der zugeordneten Montageeinrichtung 22,23 des Paneels 11,12 verbunden. Die ausschließlich formschlüssig mit der zugeordneten Montageeinrichtung 22,23 verbundenen Montageabschnitte 27 der Führungseinrichtungen 18,19 weisen Anschläge 29 auf, mittels derer die kraft- und formschlüssig mit der zugeordneten Montageeinrichtung 22,23 verbundenen Montageabschnitte 28 der Führungseinrichtungen 18,19 bei deren Montage an den Paneelen 11,12 gegenüber der zugeordneten Montageeinrichtung 22,23 ausgerichtet werden können.

Die ausschließlich formschlüssig mit der zugeordneten Montageeinrichtung 22,23 verbundenen Montageabschnitte 27 der Führungseinrichtungen 18,19 hintergreifen jeweils eine Hinterschneidung 30 der zugeordneten Montageeinrichtung 22,23. Dabei erstrecken sich die Hinterschneidungen 30 der Paneele 11,12 ebenso wie die diese hintergreifenden Montageabschnitte 27 der Führungseinrichtungen 18,19 in Längsrichtung des jeweiligen Paneels 11,12 sowie schräg zu diesem. Die schrägen Montageabschnitte 27 der Führungseinrichtungen 18,19 erstrecken sich zudem jeweils in Richtung des zugeordneten Paneels 11,12 über eine zu dem Paneel 11,12 parallele Anlageebene E hinaus, in der die jeweilige Führungseinrichtung 18,19 mit ihrer Rückseite flächig an der Innenseite 31 des Paneels 11,12 anliegt.

Die Hinterschneidungen 30 der Montageeinrichtungen 22,23 der Paneele 11,12 sind jeweils durch eine Nut 32,33 der jeweiligen Montageeinrichtung 22,23 gebildet. Dabei weisen im dargestellten und insoweit bevorzugten Ausführungsbeispiel die die Hinterschneidungen 30 bildenden Nuten 32 der oberen Montageeinrichtungen 22 und die die Hinterschneidungen 30 hintergreifenden Montageabschnitte 27 sowohl der oberen als auch der unteren Führungseinrichtungen 18,19 korrespondiere Querschnitte auf. So wird ein stabiler Sitz der die Hinterschneidungen 30 hintergreifenden Montageabschnitte 27 in den die Hinterschneidungen 30 bildenden Nuten 32 der oberen Montageeinrichtungen 22 ermöglicht. Die die Hinterschneidungen 30 bildenden Nuten 33 der unteren Montageeinrichtungen 23 der Paneele 11,12 sind dagegen jeweils durch den unteren Verbindungsabschnitt 25 des jeweiligen Paneels 11,12 gebildet, der im Fall der mittleren Paneele 11 formschlüssig und verschwenkbar mit dem darunter angeordneten Paneel 11,12 und im Fall des untersten Paneels 12 formschlüssig und über Schrauben 34 mit dem Dichtelement 26 verbunden ist.

Die kraft- und formschlüssig mit der zugeordneten Montageeinrichtung 22,23 verbundenen Montageabschnitte 28 der Halteelemente 21 der Führungseinrichtungen 18,19 sind vorliegend jeweils über zwei in Längsrichtung des jeweiligen Halteelements 21 voneinander beabstandete separate Montagemittel 35 mit der Montageeinrichtung 22,23 verbunden. Dabei greifen die separaten Montagemittel 35 der Führungseinrichtungen 18,19 jeweils in eine Nut 36 der zugeordneten Montageeinrichtung 22,23 des Paneels 11,12 ein, die vorliegend als T-Nut 36 mit einem wenigstens im Wesentlichen T-förmigen Querschnitt ausgebildet ist und sich in Längsrichtung des Paneels 11,12 erstreckt. Die separaten Montagemittel 35 sind im dargestellten und insoweit bevorzugten Ausführungsbeispiel als Niete 35 ausgebildet. Alternativ könnten die separaten Montagemittel 35 jedoch auch als Schrauben oder Bolzen ausgebildet sein. Im Falle einer Ausbildung als Schrauben könnten die separaten Montagemittel 35 dann zudem mit in den T-Nuten 36 formschlüssig gehaltenen Nutensteinen verschraubt sein.

Die Halteelemente 21 der Führungseinrichtungen 18,19 sind vorliegend als Halteprofile 21 ausgebildet, die sich in Längsrichtung des jeweils zugeordneten Paneels 11,12 erstrecken. Dabei weisen die Halteprofile 21 jeweils durchgängig einen im Wesentlichen dreieckigen Querschnitt auf, dessen von dem jeweils zugeordneten Paneel 11,12 wegweisende Ecke 37 zur Vermeidung von Verletzungen und Beschädigungen der Ladung abgerundet ist.

### Bezugszeichenliste

- 1: Nutzfahrzeug
- 2: Nutzfahrzeugaufbau
- 3: Stirnwand
- 4: Seitenwand
- 5: Dach
- 6: Rückwand
- 7: Rückwandrahmen
- 8: Rolltor
- 9: Wandelement
- 10,11,12: Paneel
- 13: Schienensystem
- 14: Schienenelement
- 15,16: Schienenabschnitt
- 17: Laderaum
- 18,19: Führungseinrichtung
- 20: Führungselement
- 21: Halteelement
- 22,23: Montageeinrichtung
- 24,25: Verbindungsabschnitt
- 26: Dichtelement
- 27,28: Montageabschnitt
- 29: Anschlag
- 30: Hinterschneidung
- 31: Innenseite
- 32,33: Nut
- 34: Schraube
- 35: separates Montagemittel
- 36: Nut
- 37: abgerundete Ecke

- E: Anlageebene
- Z: Zugmaschine

## Patentansprüche

1. Nutzfahrzeugaufbau (2), insbesondere für einen Lastkraftwagen, Anhänger oder Sattelauflieger (1), mit einem Rolltor (8), wobei das Rolltor (8) ein von einer den Nutzfahrzeugaufbau (2) versschließenden Schließstellung in eine den Nutzfahrzeugaufbau (2) zum Be- und/oder Entladen freigebende Offenstellung und zurück verstellbares Wandelement (9) und ein Schienensystem (13) zum Führen des Wandelements (9) beim Verstellen von der Schließstellung in die Offenstellung und zurück aufweist, wobei das Wandelement (9) eine Reihe von den Nutzfahrzeugaufbau (2) in der Schließstellung des Wandelements (9) jeweils abschnittsweise verschließenden Paneelen (10,11,12) aufweist, wobei eine Mehrzahl von jeweils an einer zugeordneten Montageeinrichtung (22,23) eines der Paneele (11,12) form- und/oder kraftschlüssig montierten Führungseinrichtungen (18,19) jeweils zum Führen des jeweiligen Paneels (11,12) entlang des Schienensystems (13) vorgesehen ist und wobei wenigstens zwei der Führungseinrichtungen (18,19) wenigstens in der Schließstellung des Wandelements (9) wenigstens abschnittsweise, insbesondere wenigstens im Wesentlichen, auf unterschiedlichen Höhenniveaus bezogen auf das der jeweiligen Führungseinrichtung (18,19) zugeordnete Paneel (11,12) angeordnet sind,
**dadurch gekennzeichnet, dass**
die Führungseinrichtungen (18,19) und die Montageeinrichtungen (22,23) derart korrespondierend zueinander ausgebildet sind, dass die Führungseinrichtungen (18,19) jeweils an der wenigstens einen der wenigstens einen anderen Führungseinrichtung (18,19) zugeordneten Montageeinrichtung (22,23) form- und/oder kraftschlüssig montierbar sind.

2. Nutzfahrzeugaufbau nach Anspruch 1,
**dadurch gekennzeichnet, dass**
die Führungseinrichtungen (18,19) jeweils wenigstens ein Führungselement (20) zum Kontaktieren des Schienensystems (13), insbesondere wenigstens eine Führungsrolle (20) zum Abrollen an dem Schienensystem (13), und ein das Führungselement (20) haltendes und an der zugeordneten Montageeinrichtung (22,23) montiertes Halteelement (21) aufweisen.

3. Nutzfahrzeugaufbau nach Anspruch 1 oder 2,
**dadurch gekennzeichnet, dass**
die Führungseinrichtungen (18,19), insbesondere die Halteelemente (21) der Führungseinrichtungen (18,19), jeweils wenigstens einen mit der zugeordneten Montageeinrichtung (22,23) des Paneels (11,12) verbundenen Montageabschnitt (27,28), vorzugsweise wenigstens zwei, insbesondere auf gegenüberliegenden Seiten der Führungseinrichtung (18,19) angeordnete, mit der zugeordneten Montageeinrichtung (22,23) des Paneels (11,12) verbundene Montageabschnitte (27,28), aufweisen und dass, vorzugsweise, wenigstens die Montageabschnitte (27,28), insbesondere wenigstens die Halteelemente (21), der verschiedenen Führungseinrichtungen (18,19) wenigstens im Wesentlichen gleichartig, insbesondere wenigstens im Wesentlichen identisch, ausgebildet sind.

4. Nutzfahrzeugaufbau nach Anspruch 2 oder 3,
**dadurch gekennzeichnet, dass**
die Halteelemente (21) der Führungseinrichtungen (18,19) jeweils in einer ersten Ausrichtung an der zugeordneten Montageeinrichtung (22,23) montiert sind und in einer gegenüber der ersten Ausrichtung, vorzugsweise um wenigstens 90°, insbesondere wenigstens im Wesentlichen um 180°, gedrehten zweiten Ausrichtung an der wenigstens einen der wenigstens einen auf einem anderen Höhenniveau angeordneten Führungseinrichtung (18,19) zugeordneten Montageeinrichtung (22,23) form- und/oder kraftschlüssig montierbar sind.

5. Nutzfahrzeugaufbau nach einem der Ansprüche 1 bis 4,
**dadurch gekennzeichnet, dass**
wenigstens eine obere der Führungseinrichtungen (18,19) wenigstens in der Schließstellung des Wandelements (9) wenigstens teilweise, insbesondere wenigstens im Wesentlichen, oberhalb der Mitte, insbesondere im oberen Randbereich, des der jeweiligen Führungseinrichtung (18) zugeordneten Paneels (11,12) angeordnet ist und/oder dass wenigstens eine untere der Führungseinrichtungen (18,19) in der Schließstellung des Wandelements (9) wenigstens teilweise, insbesondere wenigstens im Wesentlichen, unterhalb der Mitte, insbesondere im unteren Randbereich, des der jeweiligen Führungseinrichtung (19) zugeordneten Paneels (11,12) angeordnet ist.

6. Nutzfahrzeugaufbau nach einem der Ansprüche 1 bis 5,
**dadurch gekennzeichnet, dass**
an einer Mehrzahl, vorzugsweise wenigstens an einem überwiegenden Teil, insbesondere wenigstens im Wesentlichen an jedem, der Paneele (11,12) jeweils wenigstens eine der, insbesondere oberen, Führungseinrichtungen (18,19) montiert ist und/oder dass an wenigstens einem der Paneele (11,12), insbesondere an dem untersten Paneel (12) des Wandelements (9), wenigstens zwei der Führungseinrichtungen (18,19) wenigstens abschnittsweise, insbesondere wenigstens im Wesentlichen, auf unterschiedlichen Höhenniveaus bezogen auf die Schließstellung des Wandelements (9) montiert sind, vorzugsweise wenigstens eine obere und wenigstens eine untere Führungseinrichtung (18,19) montiert sind.

7. Nutzfahrzeugaufbau nach einem der Ansprüche 1 bis 6,
**dadurch gekennzeichnet, dass**
ein Montageabschnitt (27) jeder Führungseinrichtung (18,19), insbesondere ausschließlich, formschlüssig und ein anderer Montageabschnitt (28) jeder Führungseinrichtung (18,19) kraftschlüssig, insbesondere kraftschlüssig und formschlüssig, mit der zugeordneten Montageeinrichtung (22,23) des Paneels (11,12) verbunden ist und/oder dass ein Montageabschnitt (27,28), insbesondere der, besonders bevorzugt ausschließlich, formschlüssig verbundene Montageabschnitt (27), jeder Führungseinrichtung (18,19) einen Anschlag (29) zum Ausrichten eines anderen, insbesondere des kraftschlüssig verbundenen, Montageabschnitts (27,28) der jeweiligen Führungseinrichtung (18,19) gegenüber der zugeordneten Montageeinrichtung (22,23) des Paneels (11,12) aufweist.

8. Nutzfahrzeugaufbau nach einem der Ansprüche 1 bis 7,
**dadurch gekennzeichnet, dass**
ein Montageabschnitt (27) jeder Führungseinrichtung (18,19) eine Hinterschneidung (30) der zugeordneten Montageeinrichtung (22,23) des Paneels (11,12), insbesondere wenigstens in einer Richtung wenigstens im Wesentlichen senkrecht zum Paneel (11,12), formschlüssig hintergreift und dass, vorzugsweise, sich die Hinterschneidungen (30) des wenigstens einen Paneels (11,12) schräg zum jeweiligen Paneel (11,12) und/oder die die Hinterschneidungen (30) hintergreifenden Montageabschnitte (27) der Führungseinrichtungen (18,19) schräg zum jeweils zugeordneten Paneel (11,12) erstrecken.

9. Nutzfahrzeugaufbau nach Anspruch 8,
**dadurch gekennzeichnet, dass**
sich die Hinterschneidungen (30) des wenigstens einen Paneels (11,12) jeweils wenigstens im Wesentlichen in Längsrichtung des jeweiligen Paneels (11,12) erstrecken und/oder dass die Hinterschneidungen (30) des wenigstens einen Paneels (11,12) jeweils durch eine Nut (32,33) des jeweiligen Paneels (11,12) gebildet sind und, vorzugsweise, wenigstens eine der die Hinterschneidungen (30) bildenden Nuten (32) des wenigstens einen Paneels (11,12) und wenigstens der die jeweilige Hinterschneidung (30) hintergreifende Montageabschnitt (27) der wenigstens einen Führungseinrichtung (18) korrespondierende Querschnitte aufweisen.

10. Nutzfahrzeugaufbau nach einem der Ansprüche 1 bis 9,
**dadurch gekennzeichnet, dass**
ein Montageabschnitt (28) jeder Führungseinrichtung (18,19) mittels wenigstens eines separaten Montagemittels (35), insbesondere Schraube, Niet (35) oder Bolzen, mit der zugeordneten Montageeinrichtung (22,23) des Paneels (11,12) form- und/oder kraftschlüssig verbunden ist, dass, vorzugsweise, die separaten Montagemittel (35) jeweils in eine, Nut (36), insbesondere T-Nut (36), des zugeordneten Paneels (11,12) eingreifen und dass, weiter vorzugsweise, sich die Nuten (36) des wenigstens einen Paneels (11,12) jeweils wenigstens im Wesentlichen in Längsrichtung des jeweiligen Paneels (11,12) erstrecken und/oder die Schrauben jeweils mit einem in der Nut (36) des zugeordneten Paneels (11,12) gehaltenen Nutenstein verschraubt sind.

11. Nutzfahrzeugaufbau nach einem der Ansprüche 2 bis 10,
**dadurch gekennzeichnet, dass**
die Halteelemente (21) der Führungseinrichtungen (18,19) als, insbesondere sich wenigstens im Wesentlichen in Längsrichtung des jeweils zugeordneten Paneels (11,12) erstreckende, Halteprofile (21) ausgebildet sind und, vorzugsweise, die Halteprofile (21) jeweils einen wenigstens im Wesentlichen dreieckigen Querschnitt, insbesondere mit einer von dem jeweils zugeordneten Paneel (11,12) weg weisenden abgerundeten Ecke (37), aufweisen und/oder dass die Halteelemente (21) der Führungseinrichtungen (18,19) jeweils mit ihrer Rückseite, insbesondere flächig, an der Innenseite (31) des zugeordneten Paneels (11,12), insbesondere in einer Anlageebene (E) wenigstens im Wesentlichen parallel zu dem Paneel (11,12), anliegen und, vorzugsweise, sich ein mit dem jeweils zugeordneten Paneel (11,12) verbundener Montageabschnitt (27,28), insbesondere der die Hinterschneidung (30) des zugeordneten Paneels (11,12) hintergreifende Montageabschnitt (27), jedes Halteelements (21) in Richtung des jeweiligen Paneels (11,12) über die Anlageebene (E) hinaus erstreckt.

12. Nutzfahrzeugaufbau nach einem der Ansprüche 1 bis 11,
**dadurch gekennzeichnet, dass**
sich die Montageeinrichtungen (22,23) des wenigstens einen Paneels (11,12) jeweils wenigstens im Wesentlichen über die gesamte Längserstreckung des jeweiligen Paneels (11,12) erstrecken und dass, vorzugsweise, jede der Führungseinrichtungen (18,19) mit wenigstens einer anderen der Führungseinrichtungen (18,19) an derselben Montageeinrichtung (22,23), insbesondere an gegenüberliegenden Längsenden derselben Montageeinrichtung (22,23), montiert ist.

13. Nutzfahrzeugaufbau nach einem der Ansprüche 1 bis 12,
**dadurch gekennzeichnet, dass**
die Paneele (11,12) jeweils wenigstens zwei wenigstens in der Schließstellung des Wandelements (9) wenigstens abschnittsweise, insbesondere wenigstens im Wesentlichen, auf unterschiedlichen Höhenniveaus angeordnete Montageeinrichtungen (22,23) jeweils zum form- und/oder kraftschlüssigen Montieren wenigstens einer der Führungseinrichtungen (18,19) aufweisen und dass, vorzugsweise, die Montageeinrichtungen (22,23) jedes der Paneele (11,12) wenigstens eine wenigstens in der Schließstellung des Wandelements (9) wenigstens abschnittsweise, insbesondere wenigstens im Wesentlichen, in einer oberen Hälfte, insbesondere in einem oberen Randbereich, des jeweiligen Paneels (11,12) angeordnete obere Montageeinrichtung (22) und/oder wenigstens eine wenigstens in der Schließstellung des Wandelements (9) wenigstens abschnittsweise, insbesondere wenigstens im Wesentlichen, in einer unteren Hälfte, insbesondere in einem unteren Randbereich, des jeweiligen Paneels (11,12) angeordnete untere Montageeinrichtung (23) umfassen.

14. Nutzfahrzeugaufbau nach einem der Ansprüche 1 bis 13,
**dadurch gekennzeichnet, dass**
wenigstens eine der Montageeinrichtungen (22,23), insbesondere die wenigstens eine der wenigstens einen unteren Führungseinrichtung (19) zugeordnete Montageeinrichtung (23) und/oder die unteren Montageeinrichtungen (23), des wenigstens einen Paneels (11,12) wenigstens teilweise durch einen mit einem der anderen Paneele (11,12) oder mit einem Dichtelement (26), insbesondere formschlüssig, verbundenen Verbindungsabschnitt (24,25), insbesondere Verbindungsprofil (24,25), des jeweiligen Paneels (11,12) gebildet ist.

15. Nutzfahrzeugaufbau nach einem der Ansprüche 1 bis 14,
**dadurch gekennzeichnet, dass**
das Rolltor (8) an der Rückwand (6) des Nutzfahrzeugaufbaus (2) vorgesehen, insbesondere wenigstens teilweise in einem Rückwandrahmen (7) aufgenommen, ist und/oder dass der Nutzfahrzeugaufbau (2) als Kofferaufbau mit festen Seitenwänden (4), einer festen Stirnwand (3) und einem festen Dach (5) ausgebildet ist.
